Europäisches Patentamt

European Patent Office

Office européen des brevets

(19)

(11) Veröffentlichungsnummer: **0 301 453**
**A1**

(12) **EUROPÄISCHE PATENTANMELDUNG**

(21) Anmeldenummer: **88111919.2**

(22) Anmeldetag: **23.07.88**

(51) Int. Cl.⁴: **F16H 19/02 , F16C 1/20 ,
//B60S1/44**

(30) Priorität: **28.07.87 DE 3724855**

(43) Veröffentlichungstag der Anmeldung:
**01.02.89 Patentblatt 89/05**

(84) Benannte Vertragsstaaten:
**ES FR GB IT SE**

(71) Anmelder: **SWF Auto-Electric GmbH
Stuttgarter Strasse 119 Postfach 135
D-7120 Bietigheim-Bissingen(DE)**

(72) Erfinder: **Egner-Walter, Bruno
Käferflugstrasse 43
D-7100 Heilbronn(DE)**
Erfinder: **Prohaska, Hans
Nelkenweg 44
D-7120 Bietigheim-Bissingen(DE)**
Erfinder: **Teutsch, Melitta
Metterstrasse 10
D-7140 Ludwigsburg(DE)**
Erfinder: **Schmid, Eckhardt
Heilbronner Strasse 62
D-7129 Brackenheim(DE)**
Erfinder: **Baumgarten, Peter
Theodor-Heuss-Strasse 22
D-7141 Steinheim 2(DE)**

(54) Antriebsvorrichtung.

(57) Es wird eine Antriebsvorrichtung mit einem flexiblen Antriebsmittel 17 beschrieben, das aus einem Zug-Druck-Seil 30 besteht, auf dem Glieder 31 perlenartig aufgereiht sind. Die Glieder 31 besitzen an verschiedenen Stellen ihres Umfangs profilierte Bereiche 43, 44 und 32, an denen sie entlang gegengleich profilierter Bereiche einer rohrförmigen Führungsbahn 18 führbar sind. Dadurch ist ein sicherer, geräuscharmer Antrieb des flexiblen Antriebsmittels 17 auch im Bereich stark gewinkelter Führungsbahnabschnitte und damit ein sehr sicherer, geräuscharmer Antrieb des anzutreibenden Bauteils gewährleistet. Zwei an einander gegenüberliegenden Stellen jedes Gliedes 31 befindliche profilierte Bereiche 43, 44 dienen außerdem als Antriebszähne.

Fig. 2

EP 0 301 453 A1

Xerox Copy Centre

# Antriebsvorrichtung

Die Erfindung betrifft eine Antriebsvorrichtung, welche die an Oberbegriff des Anspruchs 1 aufgeführten Merkmale aufweist.

Eine solche Antriebsvorrichtung ist aus der DE-OS 31 36 335 bekannt. Das Antriebsmittel ist hier ein Zug-Schub-bzw. Druckmittel . Bei einer ersten Ausführungsform sind die Glieder des Antriebsmittels als Kugeln gestaltet, die mit nicht ganz halbkugelpfannenförmigen Ausnehmungen eines Antriebsrades in Eingriff kommen. Die Kugeln sind in freiem gegenseitigen Abstand voneinander durch Aufspritzen oder Anformen an einem Seil befestigt. Diese Ausführrugsform hat den Nachteil, daß dann, wenn die Kugeln nicht in ganz genauem Abstand vorliegen, kein störungsfreier Antrieb des Antriebsmittels und des von ihm anzutreibenden Bauteils möglich ist.

Bei einer zweiten und dritten Ausführungsform sind längliche Glieder dicht nebeneinander aufgereiht, besitzen an einer Stirnseite einen Kugelkopf und an der anderen Stirnseite eine Kugelpfanne zur gegenseitigen gelenkigen Lagerung und an einer Längsseite mehrere hintereinander verlaufende Zähne, die zum Eingriff in Zahnlücken eines Antriebsrad dienen. Bei diesen Ausführungsformen ist ein störungsfreierer Antrieb als bei der zuvor beschriebenen Ausführungsform möglich, weil mehrere Eingriffselemente an jedem Glied vorhanden sind, die immer exakt den gleichen Abstand voneinander besitzen. Die dadurch bedingte große Länge der Glieder läßt aber keine sehr stark gewinkelte Führungsbahn zu.

Weiterhin dürfte während des Betriebs bei allen aus dieser Offenlegungsschrift bekannten Antriebsvorrichtungen eine starke Geräuschentwicklung auftreten, weil die Glieder der Antriebsmittel mit in bezug auf die Antriebsmittelachse radialem Spiel in einer rohrförmigen Führung verlaufen und demgemäß zumindest in den Winkelbereichen der Führungsbahn an dieser anschlagen.

Ausgehend von diesem Stand der Technik ist es Aufgabe der Erfindung, eine Antriebsvorrichtung zu schaffen, deren flexibles Antriebsmittel möglichst geräuscharm arbeitet und auch entlang einer gegebenfalls bereichsweise stark gewinkelten Führungsbahn jederzeit exakt bewegbar ist.

Diese Aufgabe wird erfindungsgemäß mittels einer Antriebsvorrichtung gelöst, welche die im kennzeichnenden Teil des Anspruchs 1 aufgeführten Merkmale aufweist. Die Antriebsmittelglieder nehmen hier im wesentlichen, das heißt bis auf das zum Gewährleisten ihrer Bewegbarkeit in Längsrichtung der Führungsbahn unbedingt nötige Spiel, immer im gleichen Abstand zur Führungsbahn ein, weil sie durch wenigstens eine Profilverbindung miteinander verbunden sind. Ein unerwünschtes, energiezehrendes weites Entfernen von und darauffolgendes Hinbewegen zur sowie ein stark geräuschverursachendes Anschlagen der Antriebsmittelglieder an die Führungsbahn während der Bewegung des Antriebsmittels kann somit selbst im Bereich stark gewinkelten Führungsbahnabschnitte nicht erfolgen.

Vorteilhafte geometrische Ausgestaltungen der Profile, die ein leichtes Gleiten der Antriebsmittelglieder entlang der Führungsbahn ermöglichen, sind in den Ansprüchen 2 bis 4 aufgezeigt.

Als prinzipielle Profilverbindungen kommen insbesondere Nutverbindungen in Betracht. Dabei können beispielsweise die Glieder eine Nut und die Führungsbahn eine Leiste oder umgekehrt besitzen. Eine noch bessere, erfindungsgemäß bevorzugte Ausführungsform ist in Anspruch 5 aufgezeigt. Die Ausgestaltung der profilierten Bereiche an den Gliedern als Zapfen, worunter hier im Querschnitt gegenüber den übrigen Bereichen der Glieder verminderte Fortsätze verstanden werden, bedingt einen geringeren Materialaufwand als die zuvor genannte Nut-Leistenführung und ermöglicht, wenn die Glieder nicht in Längsrichtung hintereinander mehrere Zapfen besitzen, eine nur im wesentlichen punktuell stattfindende Führung jedes Gliedes gegenüber der diesem Zapfen zugehörigen Nut in der Führungsbahn, so daß die Glieder ansonsten frei stehen, deshalb besonders leicht relativ gegeneinander bewegt, d.h. verschwenkt und problemlos sogar um extrem stark gewinkelte Führungsbahnecken bewegt werden können.

Die Zapfen verleihen dem Antriebsmittel außerdem eine zahnriemenaähnliche Gestalt, so daß das Antriebsmittel, wie in Anspruch 6 vorgeschlagen, an ihnen sehr sicher angetrieben werden kann. Die Zapfen erfüllen hier demgemäß eine Doppelfunktion, nämlich als Führungselement und als Antriebselement. Dies wirkt sich günstig auf die Antriebsmittelkosten aus.

Wenn die Glieder, wie in Anspruch 7 vorgeschlagen, mehrere profilierte Bereiche besitzen, ist eine besondere sichere Führung des Antriebsmittels entlang einer Führungsbahn möglich, die entsprechende Gegenprofile aufweist. Dann ist zum einen kein Verdrehen oder Verkippen der Glieder um eine in Längsrichtung durch die Glieder verlaufende geometrische Achse, die mit der Antriebsmittelachse identisch ist, möglich. Weiterhin ist dadurch der in Anspruch 10 vorgeschlagene sehr sichere Antrieb der Glieder an zwei Profilen möglich. Es wird darauf hingewiesen, daß für diese Antriebsart unabhängiger Schutz beansprucht wird, da deren Verwirklichung auch bei Antriebsverrichtungen vorteilhaft ist, bei der die Profile an den Gliedern nicht zur Führung des Antriebsmittels ausgenutzt werden.

Vorteilhafte Ausgestaltungen eines für die in Anspruch 10 vorgeschlagene Antriebsart geeigneten Antriebsrades für Glieder mit Zapfen sind in den Ansprüchen 11 bis 13 aufgezeigt und allgemein vorteilhafte Ausgestaltungen des Antriebsrades, die trotz dessen relativ komplizierter Gestalt eine preisgünstige Fertigung desselben ermöglichen, in den Ansprüchen 13 und 14.

Wenn die Glieder und das Antriebsrad wie in Anspruch 15 aufgezeigt, maßlich aufeinander abgestimmt sind, ist besonders sicher gewährleistet, daß jedes Glied exakt mit dem Antriebsrad in Eingriff kommen kann und daß mehrere benachbarte Glieder gleichzeitig mit dem Antriebsrad in Eingriff kommen können. Es ist somit ein großer Umschlingungswinkel des flexiblen Antriebsmittels um das Antriebsrad und insgesamt ein wirkungsvoller Antrieb des Antriebsmittel möglich. Es wird darauf hingewiesen, daß auch für die in Anspruch 15 vorgeschlagene Ausgestaltung unabhängiger Schutz beansprucht wird, da deren Verwirklichung auch bei einer Antriebsvorrichtung vorteilhaft ist, bei der die Antriebsmittelglieder nicht profiliert sind. Die Glieder können dabei prinzipiell über ein Filmschanier oder dergleichen aneinander angelenkt sein.

Eine großflächigere und damit sicherere Führung der Glieder gegeneinander ist jedoch mit an den Gliederstirnflächen angeordneten Lagerelementen möglich, insbesondere wenn letztere die in Anspruch 17 vorgeschlagene Ausdehnung aufweisen. Die Lagerelemente können dabei gemäß Anspruch 18 an sich bekannte Kugelköpfe und Kugelpfannen sein.

Wenn die Glieder des Antriebsmittels über ein Filmscharnier miteinander verbunden oder wenn sie miteinander verrastet sind, können sie allein das flexible Antriebsmittel darstellen. Da eine Verrastung der Glieder aber deren relative Beweglichkeit gegeneinander beeinträchtigen kann, wenn die Größe der Rastmittel im Verhältnis zur Gesamtgröße der Glieder relativ groß sind, was wiederum wegen einer großen Sicherheit der Rastverbindungen empfehlenswert ist, und Filmscharniere einen größeren Material- und Fertigungsaufwand der Glieder bedingen, ist es besser, die Glieder in an sich bekannter Weise auf einem flexiblen Element wie einem Seil, einem Draht oder dergleichen aufzureihen. Die in Anspruch 20 vorgeschlagene, an sich bekannte Weiterbildung der Glieder erleichtert deren Aufreihen auf dem flexiblen Element und erleichtert die relative Beweglichkeit der Antriebsmittelabschnitte gegeneinander, weil die erweiterten Bohrungsenden gestatten, daß die Glieder zumindest ein gewisses Stück schwenken können, ohne mit den Bohrungsenden an das flexible Element anzustoßen.

Das flexible Antriebsmittel kann dabei umlaufend angetrieben werden. Die in Anspruch 22 vorgeschlagene Ausbildung des Antriebmitttels als Zug-Druckmittel bedingt aber, wie an sich bekannt, eine weniger große Länge des Antriebsmittels und der Führungsbahn und bringt somit Kostenvorteile. Bei dieser Variante müssen die Glieder ggf. das flexible Element selbstverständlich eine genügende Steifigkeit besitzen.

Der gegenseitige Abstand der Glieder voneinander bzw. Längenänderungen durch Temperaturschwankungen, wenn die Glieder und das flexible Element aus verschiedenen Werkstoffen bestehen bzw. die Gefahr einer bleibenden Verformung der Glieder sowie ein "Überspringen" eines profilierten Bereiches am Antriebsrad kann bzw. können in sicherer und vorteilhafter Weise durch die in Anspruch 23 aufgezeigte Maßnahme reguliert bzw. vermieden werden. Die hier vorgeschlagene Anordnung eines federbeaufschlagten Stellgliedes in einem rohrförmigen Halter gewährleistet eine sichere Führung des Stellgliedes, so daß es mit hohem Wirkungsgrad arbeitet.

Es wird darauf hingewiesen, daß auch für diese Ausgestaltung unabhängiger Schutz beansprucht wird, da deren Verwirklichung auch bei Antriebsvorrichtungen vorteilhaft ist, die keine profilierten Antriebsmittelglieder besitzen.

Die in Anspruch 24 vorgeschlagene Weiterbildung ermöglicht eine besonders exakte Regulierung des Gliederabstandes.

In den Ansprüchen 27 bis 29 ist aufgezeigt, wie gut funktionierende Glieder und Führungsbahnen kostengünstig gefertigt werden können.

Wenn die Antriebsvorrichtung zur Verwendung an Außenanlagen vorgesehen ist, werden die in den Ansprüchen 32 und 33 aufgezeigten Weiterbildungen der Führungsbahn vorgeschlagen. Diese verhindern die Funktionsverminderung des flexiblen Antriebsmittels durch Witterungseinflüsse etc..

Weitere vorteilhafte Einzelheiten und Ausgestaltungen der Erfindung sind aus den übrigen Unteransprüchen und der nachfolgend erläuterten Zeichnung ersichtlich, die ein Ausführungsbeispiel zeigt.

Dabei ist dargestellt in:

Fig. 1 eine Kraftfahrzeug-Scheibenwischeranlage in Draufsicht, mit einer erfindungsgemäßen Antriebsvorrichtung mit einer offen dargestellten Führungsbahn, in

Fig. 2 ein Längsschnitt durch einen Endbereich der Führungsbahn und des flexiblen Antriebselements der in Fig. 1 dargestellten Antriebsvorrichtung, in

Fig. 3 ein Glied der Antriebsvorrichtung in Ansicht in Pfeilrichtung Z der Fig. 2 und in vergrößerter Darstellung, in

Fig. 4 ein Schnitt entlang der Linie IV - IV in Fig. 3 durch das Glied, in

Fig. 5 ein diametraler Schnitt durch das Antriebsrad der Antriebsvorrichtung, in

Fig. 6 eine Ansicht in Pfeilrichtung C auf einen Teilbereich des Antriebsrades nach Fig. 5 in vergrößerter Darstellung, in

Fig. 7 ein Ende einer Führungsbahn in Ansicht, die bei der Antriebsvorrichtung verwendet werden kann und in

Fig. 8 ein Ende einer weiteren Führungsbahn in Ansicht, die bei der Antriebsvorrichtung verwendet werden kann.

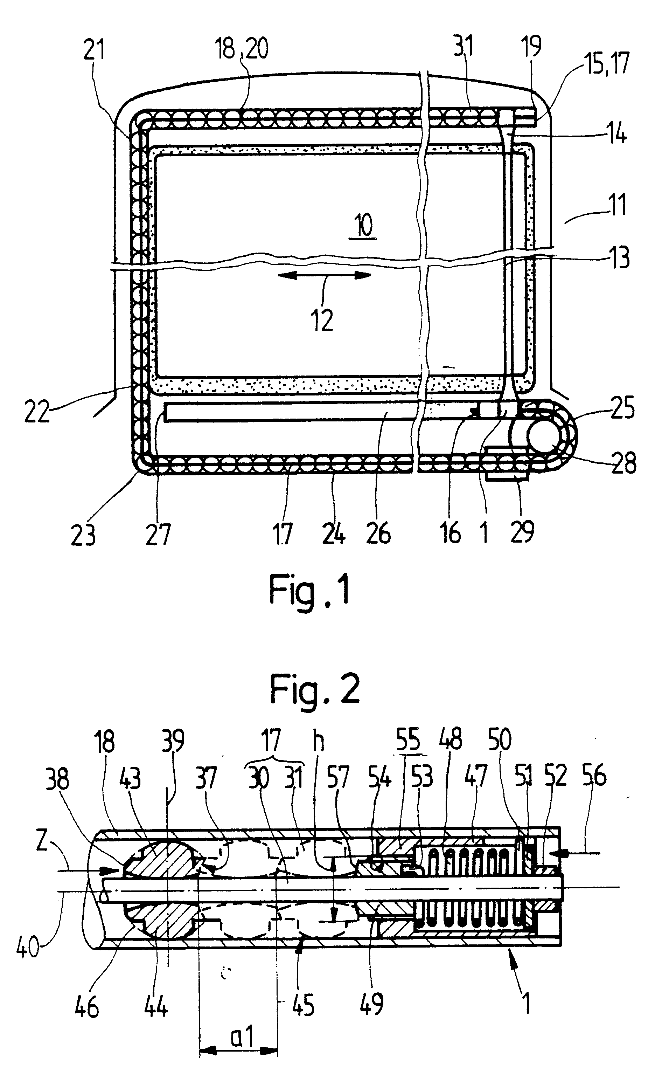

Die in Fig. 1 nur prinzipiell dargestellte Kraftfahrzeug-Scheiben wischeranlage ist außen im Bereich der Frontscheibe 10 eines Kraftfahrzeuges 11 vorgesehen. Sie ist als Horizontal-Wischeranlage ausgebildet und besitzt einen in Pfeilrichtung 12 über die Scheibe 10 bewegbaren Scheibenwischer 13. Der Scheibenwischer 13 ist beidendig über jeweils einen Mitnehmer 14 an den Enden 15 und 16 eines länglichen, flexiblen Antriebsmittels 17 befestigt, das als Zug-Druckmittel ausgestaltet und in Längsrichtung einer in wesentlichen rohrförmigen Führungsbahn 18 bewegbar ist. Die Führungsbahn 18 erstreckt sich von einem oberhalb der rechten Ecke der viereckigen Scheibe 10 angeordneten Ende 19 aus zunächst mit einem Abschnitt 20 geradlinig oberhalb und entlang der Oberkante der viereckigen Scheibe 10 bis zur linken Seite des Fahrzeugs 11, dann mit einem Abschnitt 21 in einem Winkel von etwa 90 Grad um die linke obere Ecke der Scheibe 10, anschließend mit einem Abschnitt 22 geradlinig entlang der linken Seitenkante der Scheibe 10 über diese hinaus nach unten, danach in einem Abschnitt 23 in einem Winkel von etwa 90 Grad auf Abstand um die linke untere Ecke der Scheibe 10, anschließend mit einem Abschnitt 24 geradlinig bis zur rechten Seite des Fahrzeugs 11, danach mit einem Abschnitt 25 in einem Winkel von etwa 180 Grad und letztendlich mit einem Abschnitt 26 parallel zum Abschnitt 24 und bis nahe zur linken Seite des Fahrzeugs 11, wo sie bei 27 endet.

Das flexible Antriebsmittel 17 ist weniger lang als die Führungsbahn 18. Es reicht vom oberen Ende 19 der Führungsbahn 18 bis kurz hinter deren Abschnitt 25. Ein fast der Breitenausdehnung der Scheibe 10 entsprechend langer Führungsbahnabschnitt ist somit immer leer.

Das Antriebsmittel 17 steht mit einem Antriebsrad 28 in Eingriff, welches mittels eines in zwei Drehrichtungen betreibbaren Elektromotors 29 angetrieben werden kann.

Wenn dieser das Antriebsrad 28 im Gegenuhrzeigersinn dreht, wird das Antriebsmittel 17 an seinem Ende 16 in Richtung des Endes 27 der Führungsbahn 18 gedrückt, wodurch der Scheibenwischer 13 in Pfeilrichtung 12 nach links über die Scheibe 10 bewegt wird und diese säubert. Wenn der Scheibenwischer 13 fast die linke Seite der Scheibe 10 erreicht hat, befindet sich das Ende 16 des Antriebsmittels 17 im Bereich des Endes 27 der Führungsbahn 18 und das Ende 15 des Antriebsmittels 17 befindet sich im Bereich des gewinkelten Abschnitts 21 der Führungsbahn 18. Der Abschnitt 20 der Führungsbahn 18 steht dann frei. Nach einer vorzugsweise automatisch gesteuerten Umkehrung der Drehrichtung des Elektromotors 29 wird das Antriebsrad 28 im Uhrzeigersinn gedreht. Dann wird das Antriebsmittel 17 in Richtung des Abschnitts 25 der Führungsbahn 18 gezogen, wodurch der Scheibenwischer 13 in Pfeilrichtung 12 nach rechts über die Scheibe 10 bewegt wird und diese säubert, bis das Antriebsmittel 17 und er die in Fig. 1 dargestellten Positionen erreicht haben.

Das flexible Antriebsmittel 17 ist dabei problemlos und geräuscharm sogar entlang der stark gewinkelten Abschnitte 21, 23 und 25 der Führungsbahn 18 bewegbar, weil das Antriebsmittel 17, die Führungsbahn 18 und das Antriebsrad 28 wie nachfolgend anhand der Fig. 2 bis 8 beschrieben, erfindungsgemäß ausgestaltet sind.

Wie die Fig. 2 zeigt, setzt sich das flexible Antriebsmittel 17 aus einem Stahlseil 30 und einer Vielzahl von ein wesentlichen kugelförmigen Gliedern 31 zusammen, die aus einem Kunststoff mit guten Gleiteigenschaften spritzgegossen und lose auf dem Seil 30 aufgereiht sind.

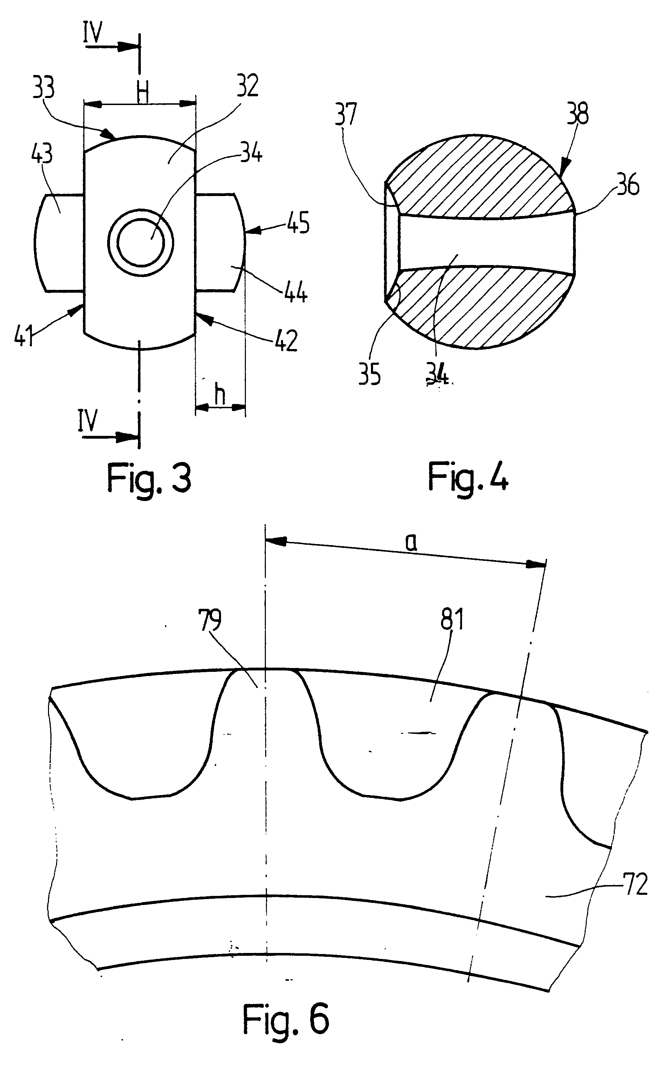

Die in den Fig. 3 und 4 näher dargestellten Glieder 31 besitzen einen kreisscheibenartigen Grundkörper 32 mit einer nach außen gewölbten Mantelfläche 33. Dieser Grundkörper 32 wird mittig seiner Höhenerstreckung H diametral von einer zylindrischen Bohrung 34 durchsetzt, die sich an beiden Enden 35 und 36 konisch erweitert.

Jedes der Glieder 31 besitzt im Bereich des Endes 35 der Bohrung 34 und damit an einer Stirnfläche eine kugelpfannenförmige Vertiefung 37 in der Mantelfläche 33 des Grundkörpers 32, die sich über die gesamte Höhe H des Grundkörpers 32 erstreckt und im übrigen maßlich auf die Mantelfläche 33 eines ihm benachbarten Gliedes abgestimmt ist.

Die Glieder 31 sind derart auf das Seil 30 aufgereiht, daß die Vertiefungen 37 alle in die gleiche Richtung zeigen und demgemäß jedes Glied 31 mit der der Vertiefung 37 gegenüberliegenden, von einer Stirnfläche gebildeteten Stelle 38 der Mantelfläche 33 in der Vertiefung 37 des ihm unmittelbar benachbarten Gliedes lagert. Die Glieder 31 sind demgemäß nach Art eines Kugelgelenks an den Stirnflächen 37 und 38 gelenkig aneinander gelagert und können problemlos um eine gedachte geometrische Achse 39 kippen, welche die sich mittig in Längsrichtung durch das Seil 30 und die Glieder 31 erstreckende Antriebsmittelachse 40 rechtwinklig schneidet. Das trägt zur guten Beweglichkeit der Glieder 31 entlang der stark gewinkelten Abschnitte 21, 23 und 25 der Führungsbahn 18 (vgl. Fig. 1) bei. Die Glieder 31 sind dabei hervorragend gegeneinander geführt, weil sich die von ihren Stirnflächen 37, 38 gebildeten Kugelgelenke, wie zuvor erwähnt, über die gesamte Höhe H des Grundkörpers 32 erstrecken bzw. senkrecht zu der sich in Längsrichtung durch die Glieder 31 erstreckenden Achse 40 und damit senkrecht zur Bewegungsrichtung des Antriebsmittels 17 so groß wie die Stirnflächen 37, 38 der Glieder 31 sind.

Die konischen Erweiterungen 35 und 36 der Bohrungen 34 erleichtern außerdem das Aufreihen der Glieder 31 auf dem Seil 30.

Wie die Fig. 2 und 3 zeigen, erstreckt sich von jeder der ebenen Grundflächen 41 bzw. 42 der Grundkörper 32 der Glieder 31 ein Zapfen 43 bzw. 44 nach außen weg, d.h. in Radialrichtung der Achse 40. Die Zapfen 43 und 44 sind zylindrisch und besitzen am äußeren Ende jeweils eine nach außen gewölbte Grundfläche 45. Sie sind so lang, daß die Glieder 31 im gedachten Umriß 46 kugelförmig sind. Wegen der beschriebenen Ausbildung der Grundflächen 45 liegen die Glieder 31, wie die Fig. 2 deutlich zeigt, in Längsrichtung bzw. in Richtung der Achse 40 betrachtet, oben und unten jeweils nur punktuell an der Führungsbahn 18 an.

Diese Maßnahme trägt ebenfalls zur problemlosen Verschwenkbarkeit der Glieder 31 gegeneinander und zur problemlosen Beweglichkeit der Glieder 31 entlang der stark gewinkelten Führungsbahnabschnitte bei.

Zur Sicherung der zuvor beschriebenen Lagerung der Glieder 31 aneinander dient eine Stelleinrichtung 1, die im Endbereich 16 des flexiblen Antriebsmittels 17 vorgesehen ist. Die Stelleinrichtung 1 setzt sich aus einem rohrförmigen Halter 47, welcher in die rohrförmige Führungsbahn 18 eingeklemmt ist, einem Federelement 48 und einem Stellglied 49 zusammen.

Das Federelement 48 ist als Schraubendruckfeder ausgebildet, umgibt das Seil 30, stützt sich mit einem ersten Ende 50 an einem kreisringscheibenartigen, den Halter 47 an einem ersten Ende begrenzenden Abstützelement 51, das andererseits mittels eines fixen Nippels 52 das Seil 30 in Richtung der Achse 40 beweglich führt, ab und ist mit einem zweiten Ende 53, das sich in Richtung der Achse 40 der Antriebsvorrichtung erstreckt, in eine Öffnung des im wesentlichen zylindrischen, in Achsrichtung von dem Seil 30 durchsetzten Stellglieds 49 eingeklemmt. An seiner äußeren Zylindermantelfläche 54 ist das Stellglied 49 mit einem Gewinde versehen. Der Halter 47 besitzt an seinem zweiten Ende eine einstückig angeformte Mutter 55 mit einem Gegengewinde zu dem Stellgliedgewinde. Über die so gebildete Schraubverbindung wird das Stellglied 49 durch das Federelement 48 unterstützt in Pfeilrichtung 56 auf dem Seil 30 bewegt, so daß es immer an das ihm benachbarte Glied 31 gedrückt wird, welches wiederum den auf es ausgeübten Druck auf das ihm benachbarte Glied weitergibt usw. bis zum nicht dargestellten letzten Glied des Antriebsmittels 17 in dessen Bereich 15.

Hier kann entweder ein Anschlag für das letzte Glied oder eine Stelleinrichtung vorgesehen sein, die wie die beschriebene Stelleinrichtung aufgebaut, jedoch entgegengesetzt wirkend angeordnet ist.

Zu erwähnen ist noch, daß das Stellglied 49 an seiner dem Glied 31 zugekehrten Grundfläche 57 gegengleich zur Vertiefung 37 ausgebildet ist, so daß das Glied 31 und das Stellglied 49 ebenfalls nach Art eines Kugelgelenks aneinander gelagert sind. Die Führung der Glieder 31 entlang der rohrförmigen Führungsbahn 18 ist dabei optimal, weil diese wie nachfolgend beschrieben erfindungsgemäß ausgestaltet ist.

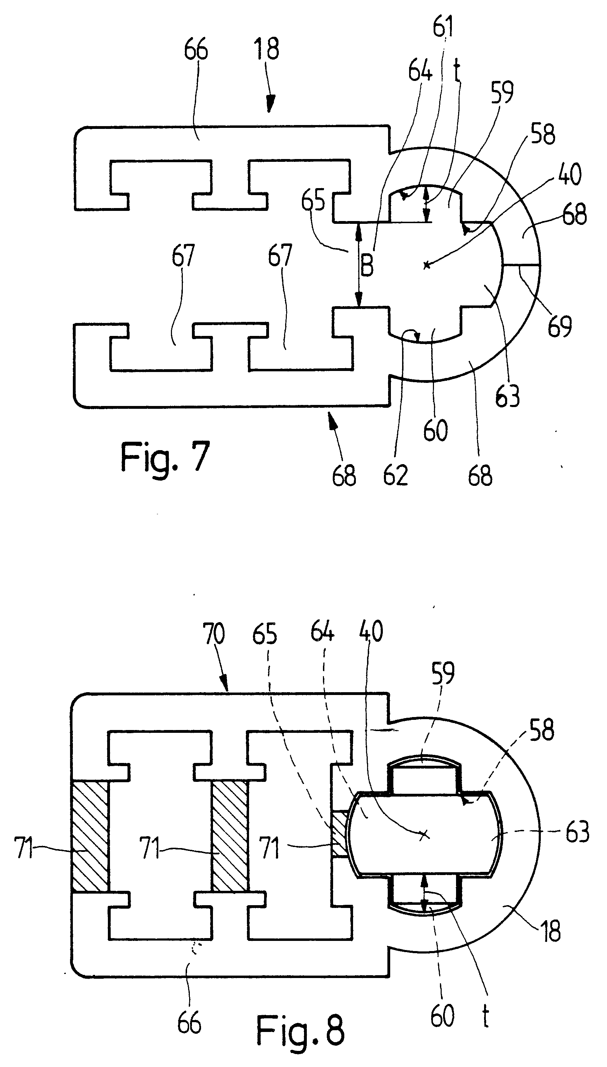

Wie die Fig. 7 zeigt, sind in die innere Mantelfläche 58 der Führungsbahn 18 an zwei einander gegenüberliegenden Stellen zwei Längsnuten 59 und 60 eingelassen. Die Längsnuten 59 und 60 stellen Führungsprofile für die Glieder 31 des Antriebsmittels 17 dar, und zwar dient eine Längsnut 59 zur Aufnahme der Zapfen 43 oder 44 und die andere Längsnut 60 zur Führung der Zapfen 44 oder 43 der Glieder 31. Die Längsnuten 59 und 60 besitzen eine Tiefe t, welche geringfügig größer als die Höhe h der Zapfen 43 bzw. 44 ist (vgl. Fig. 3), d.h. die Profile 43 und 44 der Glieder 31 und die Profile 59 und 60 der Führungsbahn 18 sind senkrecht zu bzw. in Radialrichtung der Achse 40 des Antriebsmittels 17 etwa gleich groß. Eine große, energieverzehrende Ausweichbewegung der Antriebsmittels 17 in Achsrichtung der Zapfen 43 und 44 mit lautem Anschlagen an die Grundflächen 61 und 62 der Nuten 59 und 60 ist somit nicht möglich. Weiterhin sind die Nuten 59 und 60 maßlich auf die übrigen Maße der Zapfen 43 und 44 abgestimmt und besitzen auch gewölbte Grundflächen 61 und 62.

In den seitlich der Nuten 50 und 60 liegenden Bereichen 63 und 64 ist die innere Mantelfläche 58 der Führungsbahn 18 derart geformt, daß die Grundflächen 41 und 42 der Grundkörper 32 der Glieder 31 in ganz geringen Abstand dazu verlaufen. (Hier nicht dargestellt, vgl. jedoch Fig. 8).

In dem in Fig. 7 rechts neben den Nuten 59 und 60 befindlichen Bereich 63 ist die innere Mantelfläche 58 der Führungsbahn 18 entsprechend der Mantelfläche 33 der Grundkörper 32 der Glieder 31 (vgl. Fig. 3) nach außen gewölbt.

Insgesamt besitzt die Führungsbahn 18 somit vier Längsnuten 59, 60, 63 und 64, die eine Führung jeden in Fig. 3 dargestellten Gliedes 31 an vier gleichmäßig über den Umfang verteilten, nämlich an den zwei einander gegenüberliegenden Zapfen 43 und 44 und an zwei einander gegenüberliegenden Stellen des Grundkörpers 32 ermöglichen.

Wie die Fig. 7 weiter zeigt, ist im Bereich 64 der Führungsbahn 18 ein Längsschlitz 65 vorgesehen. Dieser ermöglicht den Durchtritt der Mitnehmer 14 für den Scheibenwischer 13 (vgl. Fig. 1). Beidseitig des Schlitzes 65 ist an der Führungsbahn 18 jeweils eine Wand 66 vorgesehen. Die Wände 66 besitzen jeweils zwei Rücksprünge 67. In deren Bereich ist eine nicht dargestellte Dichtung vorgesehen, die das flexible Antriebsmittel 17 (Fig. 2) vor Witterungseinflüssen etc. schützt.

Bei der in Fig. 7 dargestellten Ausführungsform ist die Führungsbahn 18 dabei aus zwei Aluminiumschalen 68 zusammengesetzt. Die Trennebene liegt bei 69.

In Fig. 8 ist eine Führungsbahn 70 dargestellt, die der zuvor beschriebenen Führungsbahn 18 im wesentlichen gleicht. Die Bereiche der Führungsbahn 70, die denjenigen der Führungsbahn 18 gleichen, sind mit denselben Bezugszeichen wie dort versehen. Bezüglich ihrer Ausbildung und Funktion wird auf die entsprechenden Textstellen bei der Beschreibung der Führungsbahn 18 verwiesen. Hergestellt worden ist die Führungsbahn 70 mittels eines Extrusionsverfahrens aus einem Kunststoff mit guten Gleiteigenschaften. Um die Führungsbahn 70 problemlos extrudieren zu können, wurde an den Endbereichen der Wände 66 und mittig dazwischen jeweils ein Versteifungssteg 71 vorgesehen. Vor dem Einbau der nicht dargestellten Dichtung können die Versteifungsstege 71 beispielsweise mit einem Stufenfräser entfernt werden.

Die Ausführungsform nach Fig. 8 unterscheidet sich weiter von der Fig. 7 im Bereich 64. Aufgrund der Extrusionsfertigung der Führungsbahn 70 konnte er problemlos der Mantelfläche 33 der Grundkörper 32 der Glieder (Fig. 2) angepaßt und der Schlitz 65 schmaler gestaltet werden. Demgemäß ist mit der Führungsbahn 70 eine noch bessere Führung des flexiblen Antriebsmittels 17 als mit der Führungsbahn 18 möglich.

Allerdings ist der Materialaufwand für die Führungsbahn 70 aufgrund der nötigen Versteifungsstege 71 größer als bei der Führungsbahn 18.

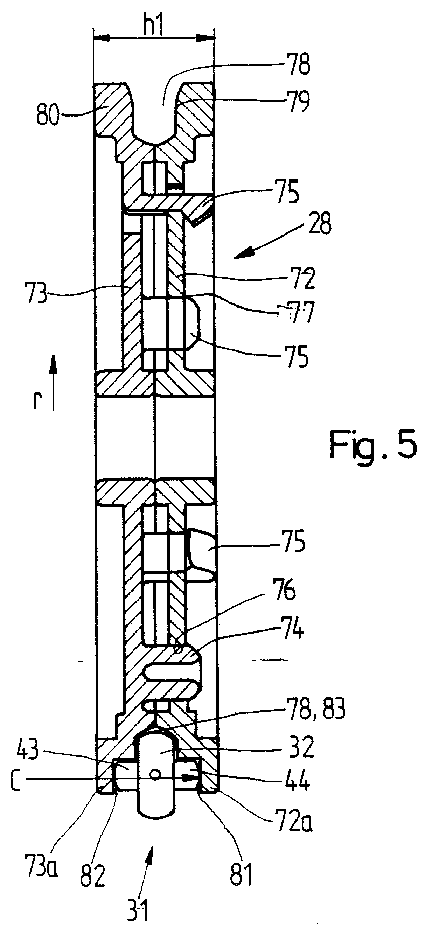

Das in den Fig. 5 und 6 näher dargestellte Antriebsrad 28 für das flexible Antriebsmittel 17 ist aus zwei Kreisscheiben 72 und 73 mit gleich großem Durchmesser zusammengesetzt. Die Kreisscheiben 72 und 73 sind aus einem federelastischen Kunststoff spritzgegossen.

Die Kreisscheibe 73 besitzt mehrere Fortsätze 74 und 75, von denen die mit den Bezugszeichen 74 bezeichneten hohlzylindrisch ausgebildet sind und in zylindrische Öffnungen 76 der Kreisscheibe 72 eingreifen und von denen die mit dem Bezugszeichen 75 bezeichneten als Rastlappen ausgebildet sind und in achteckige Öffnungen 77 der Kreisscheibe 72 eingreifen und diese im Bereich der Ränder der Öffnungen 77 untergreifen. Dadurch sind die Kreisscheiben 72 und 73 unverdrehbar gegeneinander aneinander festgelegt.

Ringsum besitzt das Antriebsrad 28 mehrere profilierte Mittel 78, von denen jedes zum Antrieb des flexiblen Antriebsmittels 17 an den Gliedern 31 dient, und zwar an deren profilierten Bereichen 43 und 44, nämlich den Zapfen 43 und 44. Diese erfüllen demgemäß eine Doppelfunktion, nämlich als Führungsmittel und als eine Art Antriebszähne. Dabei verlaufen die Mittel 78 des Antriebsrades 28 und die Glieder 31 derart zum Antriebsrad 28, daß die Mittel 78 des Antriebsrades 28 und die Zapfen 43 und 44 der Glieder 31 in Richtung der Höhenerstreckung $h_1$ des Antriebsrades 28 verlaufen. Die Mittel 78 sind als in Radialrichtung r des Antriebsrades 28 offene Ausnehmungen ausgebildet. Speziell besitzt jede Kreisscheibe 72 und 73 des Antriebsrades 28 Zähne 79 bzw. 80 und Zahnlücken 81 bzw. 82, wobei die Zähne 79 und Zahnlücken 81 der Kreisscheibe 72 gleich wie die Zähne 80 und Zahnlücken 82 der Kreisscheibe 73 ausgebildet und diesen gegenüberliegend angeordnet sind.

Die Zahnlücken 81 (und 82) sind, wie die Fig. 6 zeigt, etwa U-förmig und in ihrer Gestalt und Ausdehnung an diejenige der Zylindermantelfläche der Zapfen 43 und 44 angepaßt. Seitlich sind die Zahnlücken 81 (und 82) durch Radmaterial 72a, 73a begrenzt (vgl. Fig. 5). Die Zapfen 43 und 44 jedes mit dem Antriebsrad 28 im Eingriff stehenden Gliedes 31 liegen über ihre gesamte Höhe und diametrale Ausdehnung in den Zahnlücken 81 und 82.

Unterhalb der Zähne 70 bzw. 80 und Zahnlücken 81 und 82, d.h. weiter in Richtung der Mitte des Antriebsrades 28, bildet eine umlaufende Nut 83 einen Teil der Ausnehmungen 78. Diese Nut 83 ist der Gestalt des kreisscheibenartigen Grundkörpers 32 des Gliedes 31 angepaßt, so daß das Glied 31 über die radiale Ausdehnung des Grundkörpers 32 darin liegt. Einander benachbarte Zähne 79 bzw. 80 jeder Kreisscheibe 72 bzw. 73 besitzen dabei einen Abstand a (Fig. 6) voneinander, welcher dem Abstand $a_1$ (Fig. 2) der die Kugelgelenke bildenden Stellen 37 und 38 zweier benachbarter Glieder 31 entspricht.

Ingesamt ist somit sehr sicher gewährleistet, daß jedes Glied 31 exakt mit dem Antriebsrad 28 in Eingriff kommen kann und daß mehrere benachbarte Glieder 31 gleichzeitig mit dem Antriebsrad 28 in Eingriff kommen können. Dadurch ist ein wirkungsvoller Antrieb des Antriebsmittels 17 und des von ihm anzutreibenden Bauteils, nämlich des Scheibenwischers 14, möglich.

Bei der dargestellten Antriebsvorrichtung beträgt dabei die Zähnezahl z = 30 und der Zähnezahlfaktor n = 9,57.

Wie aus den vorherigen Ausführungen sowie aus den Figuren ersichtlich ist, sind die Glieder 31 gegenüber der Länge der Führungsbahn 18 betrachtet, relativ klein und werden im wesentlichen nur punktuell, nämlich an den nach außen gewölbten Grundflächen 45 der Zapfen 43 und 44 und an der nach außen gewölbten Mantelfläche 33 der Grundkörper 32 von und gegenüber der Führungsbahn 18 mittels deren Nuten 59, 60, 63 und 64 geführt. Dies und die gelenkige Lagerung der Glieder 31 an den Stirnflächen 37 und 38 ermöglicht deren problemlos Führung entlang der in den Abschnitten 21, 23 und 25 stark gewinkelten Führungsbahn 18 und damit insgesamt einen problemlosen Antrieb.

Eine ebenfalls sehr sichere Führung des flexiblen Antriebsmittels 17 wäre möglich, wenn die Führungsbahn 18 lediglich aus zwei einander gegenüberliegenden Schienen mit Längsnuten zur Führung der Glieder 31 an den Zapfen 43 und 44 oder ähnlicher, beispielsweise genau kugelförmiger Glieder mit Zapfen oder dergleichen oder aus Schienen mit Längsvorsprüngen zur Führung von Gliedern mit Nuten bestünde.

Die dargestellte und beschriebene rohrförmige Ausbildung der Führungsbahn 18 gewährleistet aber neben der hervorragenden Führung auch nach einen Schutz des flexiblen Antriebsmittels 17 vor Witterungseinflüssen und dergleichen. Eine weitere einfache, aber dennoch relativ sichere Führung des flexiblen Antriebsmittels 17 wäre mittels einer einzigen Schiene mit Längsnut zur Führung der Glieder 31 an einer der beiden Zapfen 43 oder 44 möglich. Um bei dieser denkbaren Ausführungsform ein unerwünschtes Entfernen des Antriebsmittel von der Führungsbahn zu verhindern, könnten dabei die Nut und die Zapfen in einem Bereich ihrer Höhenerstreckung verengt ausgebildet werden.

Selbstverständlich könnten auch bei dieser denkbaren Ausführungsform die Nut am Glied un ein Längsvorsprung an der Schiene angeordnet sein.

Erforderlichenfalls können die Nuten 59, 60, 63, 64 der Führungsbahn 18 oder die Nut bzw. Nuten einer anderen Führungsbahn und/oder nicht dargestellter Glieder zusätzlich als Schmiermittelkammern dienen. Ebenfalls ist das Vorsehen separater Schmiermittelkammern in der Führungsbahn möglich.

Anschließend sei noch darauf hingewiesen, daß das flexible Antriebsmittel 17 mit dem Seil 30 und den Gliedern 31 oder ein ähnliches flexibles Antriebsmittel mit profilierten Gliedern selbstverständlich auch in einer Antriebsvorrichtung mit umlaufendem Antrieb des flexiblen Antriebsmittels Anwendung finden kann.

Weiterhin sei ausdrücklich darauf hingewiesen, daß die Anwendung der Erfindung weder auf Kraftfahrzeugwischeranlagen, noch auf Scheibenwischeranlagen überhaupt, begrenzt ist.

**Ansprüche**

1. Antriebsvorrichtung mit einem flexiblen Antriebsmittel, das entlang einer winklig zueinander verlaufende Abschnitte aufweisenden Führungsbahn bewegbar ist und in Längsrichtung der Führungsbahn hintereinander angeordnete, relativ gegeneinander bewegliche Glieder aufweist, die an wenigstens einem Bereich zum Eingriff in ein profiliertes Antriebsrad ausgestaltet sind, dadurch gekennzeichnet, daß die Glieder (31) wenigstens einen profilierten Bereich (43, 44; 32) besitzen, welcher zum Eingriff mit wenigstens einem sich in Längsrichtung der Führungsbahn (18, 70) erstreckenden Führungsprofil (59, 60; 63, 64) dient.

2. Antriebsvorrichtung nach Anspruch 1, dadurch gekennzeichnet, daß das Profil (43, 44; 32) des Gliedes (31) und das Profil (59, 60; 63, 64) der Führungsbahn (18, 70) wenigstens senkrecht zu einer sich in Längsrichtung durch die Glieder (31) erstreckenden geometrischen Achse (40) des Antriebsmittels (17) wenigstens annähernd gleich groß sind.

3. Antriebsvorrichtung nach Anspruch 1 oder 2, dadurch gekennzeichnet, daß wenigstens eines der Profile (43, 44; 32/59, 60; 63, 64) eine gewölbte Anlagefläche (45; 33) aufweist.

4. Antriebsvorrichtung nach Anspruch 3, dadurch gekennzeichnet, daß sowohl das Profil (43, 44; 32) des Gliedes (31) als auch das Profil (59, 60; 63,64) der Führungsbahn (18, 70) in Radialrichtung einer sich in Längsrichtung durch die Glieder (31) erstreckenden geometrische Achse (40) nach außen weg gewölbte Anlageflächen (45; 33) aufweisen.

5. Antriebsvorrichtung nach wenigstens einem der vorhergehenden Ansprüche, dadurch gekennzeichnet, daß das Führungsprofil (59, 60) als Nut und der profilierte Bereich (43, 44) am Glied (31) als Zapfen ausgebildet ist.

6. Antriebsvorrichtung nach wenigstens einem der vorhergehenden Ansprüche, dadurch gekennzeichnet, daß der profilierte Bereich (43, 44) am Glied (31) auch zum Eingriff in das profilierte Antriebsrad (28) dient.

7. Antriebsvorrichtung nach wenigstens einem der vorhergehenden Ansprüche, dadurch gekennzeichnet, daß jedes Glied (31) mehrere profilierte Bereiche (43, 44; 32) aufweist, welche in Umfangsrichtung des Gliedes (31) an verschiedenen Stellen angeordnet sind.

8. Antriebsvorrichtung nach Anspruch 7, dadurch gekennzeichnet, daß die Führungsbahn (18, 70) wenigstens annähernd rohrförmig ist und eine der Anzahl der profilierten Bereiche (43, 44; 32) der Glieder (31) entsprechende Anzahl Führungsprofile (59, 60; 63, 64) aufweist.

9. Antriebsvorrichtung nach Anspruch 8, dadurch gekennzeichnet, daß die Glieder (31) im Umriß (46) im wesentlichen kugelförmig ausgebildet sind.

10. Antriebsvorrichtung insbesondere nach Anspruch 6 und 7, dadurch gekennzeichnet, daß das Antriebsrad (28) ringsum mehrere Mittel (78) zum Eingriff jeweils zweier in Richtung der Höhenerstreckung (h 1) des Antriebsrades (28) verlaufender profilierter Bereiche (43, 44) der Glieder (31) aufweist.

11. Antriebsvorrichtung nach Anspruch 5 und 10, dadurch gekennzeichnet, daß die Mittel (78) als in Radialrichtung (r) des Antriebsrades (28) offene Ausnehmungen ausgebildet sind.

12. Antriebsvorrichtung nach Anspruch 11, dadurch gekennzeichnet, daß die Ausnehmungen (78) seitlich geschlossen sind.

13. Antriebsvorrichtung nach einem der Ansprüche 10 bis 12, dadurch gekennzeichnet, daß das Antriebsrad (28)·aus zwei Scheiben (72, 73) zusammengesetzt ist.

14. Antriebsvorrichtung nach einem der Ansprüche10 bis 13, dadurch gekennzeichnet, daß das Antriebsrad (28) aus einem Kunststoff spritzgegossen ist.

15. Antriebsvorrichtung insbesondere nach einem der Ansprüche10 bis 14, dadurch gekennzeichnet, daß einander benachbarte Glieder (31) in einem Abstand (a 1) einander angelenkt sind, welcher dem mittigen Abstand (a) entspricht, den zwei zwischen zwei profilierten Mitteln (81; 82) des Antriebsrades (28) liegende Bereiche (79; 80) des Antriebsrades (28) voneinander aufweisen.

16. Antriebsvorrichtung nach wenigstens einem der vorhergehenden Ansprüche, dadurch gekennzeichnet, daß die Glieder (31) sich an den Stirnflächen (37, 38) über Lagerelemente (37, 38) gelenkig aneinander abstützen.

17. Antriebsvorrichtung nach Anspruch 16, dadurch gekennzeichnet, daß die Lagerelemente (37, 38) wenigstens senkrecht zu einer sich in Längsrichtung durch die Glieder (31) erstreckenden Achse (40) wenigstens annährend so groß wie die Stirnflächen (37, 38) der Glieder (31) sind.

18. Antriebsvorrichtung nach Anspruch 16 oder 17, dadurch gekennzeichnet, daß die Lagerelemente (37, 38) als Kugelpfannen (37) und Kugelköpfe (38) ausgebildet sind.

19. Antriebsvorrichtung nach wenigstens einem der vorhergehenden Ansprüche, dadurch gekennzeichnet, daß die Glieder (31) lose auf einem flexiblen Element (30) aufgereiht sind.

20. Antriebsvorrichtung nach Anspruch 19, dadurch gekennzeichnet, daß jedes der Glieder (31) eine sich beidendig erweiternde Durchgangsbohrung (34) für das Element (30) aufweisen.

21. Antriebsvorrichtung nach wenigstens einem der vorhergehenden Ansprüche, dadurch gekennzeichnet, daß die Glieder (31) federnd gegeneinander verspannt sind.

22. Antriebsvorrichtung nach wenigstens einem der vorhergehenden Ansprüche, dadurch gekennzeichnet, daß das Antriebsmittel (17) ein Zug-Druckmittel ist.

23. Antriebsvorrichtung insbesondere nach Anspruch 21 und 22, dadurch gekennzeichnet, daß wenigstens in einem Endbereich (16) des Antriebsmittels (17) ein rohrförmiger Halter (47) vorgesehen ist, welcher an einem ersten Ende, das den Gliedern (31) abgekehrt ist, ein Abstützelement (51) für ein Federelement (48) aufweist, das anderseits ein im Bereich des zweiten Endes des Halters (47) angeordnetes, in Längsrichtung des Antriebsmittels (17) beweglich gelagertes Stellglied (49) beaufschlagt, das an einem Glied (31) angreift.

24. Antriebsvorrichtung nach Ansprüche 23, dadurch gekennzeichnet, daß der Halter (47) und das Stellglied (49) durch eine Schraubverbindung unmittelbar miteinander verbunden sind.

25. Antriebsvorrichtung nach Anspruch 23 oder 24, dadurch gekennzeichnet, daß der Halter (47) und die Führungsbahn (18) durch eine Klemmverbindung miteinander verbunden sind.

26. Antriebsvorrichtung nach Anspruch 19 und einem der Ansprüche 23 bis 25, dadurch gekennzeichnet, daß sich das flexible Element (30) durch den Halter (47) erstreckt und im Bereich das Abstützelements (51) fixiert ist.

27. Antriebsvorrichtung nach wenigstens einem der vorhergehenden Ansprüche, dadurch gekennzeichnet, daß die Glieder (31) aus einem Kunststoff vorzugweise mit guten Gleiteigenschaften gegossen, insbesondere spritzgegossen sind.

28. Antriebsvorrichtung nach wenigstens einem der vorhergehenden Ansprüche, dadurch gekennzeichnet, daß die Führungsbahn (18, 70) aus einem vorzugsweise gute Gleiteigenschaften aufweisenden Werkstoff, insbesondere aus einem extrudierbaren Werkstoff hergestellt ist.

29. Antriebsvorrichtung nach Anspruch 8, dadurch gekennzeichnet, daß die Führungsbahn (18) aus zwei halbschalenartigen Teilen (68) zusammengesetzt ist.

30. Antriebsvorrichtung nach Anspruch 8, dadurch gekennzeichnet daß die Führungsbahn (18) auch einteilig (70) sein kann.

31. Antriebsvorrichtung nach einem der Ansprüche 28 bis 30, dadurch gekennzeichnet, daß die Führungsbahn (18, 70) zum Durchtritt eines Mitnehmers (14) für ein anzutreibendes Bauteil (13) einen sich in Längsrichtung der Führungsbahn (18) erstreckenden Schlitz (65) aufweist.

32. Antriebsvorrichtung nach Anspruch 31, dadurch gekennzeichnet, daß sich beidseitig des Schlitzes (65) jeweils eine Wand (66) erstreckt.

33. Antriebsvorrichtung nach Anspruch 31 oder 32, dadurch gekennzeichnet, daß im Durchtrittsbereich des Mitnehmers (14) eine Dichtung vorgesehen ist.

Fig .1

Fig. 2

Fig. 3

Fig. 4

Fig. 6

Fig. 5

Fig. 7

Fig. 8

Europäisches
Patentamt

**EUROPÄISCHER RECHERCHENBERICHT**

Nummer der Anmeldung

EP 88 11 1919

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 025 555 (RAMIREZ)<br>* Spalte 2, Zeile 63 - Spalte 3, Zeile 5; Spalte 3, Zeilen 32-39; Spalte 4, Zeilen 40-59; Figuren 5-8 *<br>--- | 1-8,10, 11,15, 22,29, 31-33 | F 16 H 19/02<br>F 16 C 1/20 //<br>B 60 S 1/44 |
| X | FR-A-1 333 515 (BREEDEN)<br>* Insgesamt *<br><br>--- | 1-6,8,9 ,16,18, 19,22, 27,30-32 | |
| A | DE-A-2 253 417 (BERG)<br>* Seite 5, Absätze 2,4; Seite 7, Absatz 1; Figuren 1-8,14,15 *<br>--- | 2,5-7, 10,11, 15,27 | |
| A | DE-A-2 728 260 (VOLKSWAGENWERK)<br>* Insgesamt *<br>--- | 16,18, 19 | |
| A | DE-C- 601 800 (SURYN)<br>* Insgesamt *<br>--- | 16-19 | |
| A | GB-A-2 178 505 (KOITO SEISAKUSHO)<br>* Zusammenfassung; Figuren 1,2 *<br><br>--- | 1-4,16, 17,19, 21,22 | |
| A | US-A-2 926 537 (PIETERSE)<br>* Spalte 2, Zeilen 16-22; Figur 3 *<br>--- | 23,24 | |
| A | FR-A- 685 616 (VATINELLE)<br>* Seite 2, Zeilen 31-42; Figur 2 *<br>----- | 19,20 | |

**RECHERCHIERTE SACHGEBIETE (Int. Cl.4)**

F 16 H
F 16 C
B 60 S
E 05 F

Der vorliegende Recherchenbericht wurde für alle Patentansprüche erstellt

| Recherchenort | Abschlußdatum der Recherche | Prüfer |
|---|---|---|
| DEN HAAG | 11-10-1988 | MENDE H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)